# EUROPEAN PATENT APPLICATION

(11) **EP 2 654 004 A1**
(43) Date of publication of application: **23.10.2013**
(21) Application number: 12199520.3
(22) Date of filing: 27.12.2012
(51) Int. Cl.: G06Q 10/10

(54) **Configurable process management system**

(30) Priority: 20.04.2012 IN MU12662012
(71) Applicant: Tata Consultancy Services Limited, 400021 Mumbay (IN)
(72) Inventor: Babu, Suresh, 600 058 Ambattur, Chennai (IN)
(74) Representative: Manitz, Finsterwald & Partner GbR

(57) **Abstract**

The present subject matter relates to a configurable process management system. In one embodiment, the configurable process management system (102) comprises a configuration module (108) configured to model one or more process workflows (216) based at least on process requirements. Each of the process workflows (216) comprises a plurality of process activities. Further, the configuration module (108) is configured to create at least one custom application for one of a plurality of process activities, based on application inputs obtained from a user. The custom application, thus, created is associated with a selected process workflow (216) amongst the one or more process workflows (216).

## Description

### TECHNICAL FIELD

The present subject matter relates, in general, to process management systems and, particularly but not exclusively, to a configurable process management system.

### BACKGROUND

In general, process management systems include an ensemble of automated activities for planning and monitoring the performance of a process. Many industries, such as utilities, logistics, and manufacturing use the process management systems in order to increase their productivity and efficiency. Such process management systems automate a sequence of process activities, referred to as a process workflow or a process lifecycle, for a particular business process. Additionally, process management systems have ability to identify and provide information regarding different processing states of a business project within the process lifecycle. Thus, using the process management systems, an end user is able to recognize all requirements of a business project to be met.

A business entity typically employs methods of processing the projects that are specific to their industry, products, services, organizational structure, and business plans. Therefore, the process requirements and hence, the process workflow of a business project differ from entity to entity. For a specific business entity, skilled programmers write customized source codes for the process management systems based on the needs and requirements of that business entity.

### SUMMARY

This summary is provided to introduce concepts related to a configurable process management system and concepts are further described below in the detailed description. This summary is not intended to identify essential features of the claimed subject matter nor is it intended for use in determining or limiting the scope of the claimed subject matter.

In one embodiment, a configurable process management system comprises a configuration module configured to model one or more process workflows based at least on process requirements. Each of the process workflows comprises a plurality of process activities. The configuration module is further configured to create at least one custom application for one of a plurality of process activities, based on application inputs obtained from a user. The custom application, thus created, is associated with a selected process workflow amongst the one or more process workflows.

### BRIEF DESCRIPTION OF THE FIGURES

The detailed description is described with reference to the accompanying figures. The use of the same reference number in different figures indicates similar or identical items. The features, aspects and advantages of the subject matter will be better understood with regard to the following description, and the accompanying drawings.

Fig. 1 illustrates a network environment implementing a configurable process management system, according to an embodiment of the present subject matter.

Fig. 2 illustrates components of the configurable process management system, according to an embodiment of the present subject matter.

Fig. 3 illustrates a method for configuring a process workflow and custom applications in the configurable process management system, according to an embodiment of the present subject matter.

### DETAILED DESCRIPTION

Typically, in any industry or business, a business process may be a collection of several activities to be executed to ensure process completion and compliance. Generally, every organization in itself may have several business processes to be executed for performing its process activities. Further, each business process may involve certain parameters, such as process definition, process assignment, process execution, and the like, that may define a process lifecycle for that business process. Furthermore, complex business processes may span across multiple simpler processes and tasks related to these simpler processes may span across multiple teams.

Conventionally, industries and/or businesses may deploy process management systems in order to manage, assist and automate process workflows for various employees and/or teams. A process workflow is generally a series of activities performed in a business process. Each activity (hereinafter referred as process activity) in the process workflow is also referred as a state in the process workflow. The process management systems are configured to operate with process workflows specific to the needs and requirements of a business entity or industry. Further, the process management systems may also allow an end user to assign and monitor each state of the process workflows. Furthermore, specific industry or business may require specific processing methods in order to create customized process workflows.

In order to accommodate the specific processing methods of each business, process management systems may be configured to link custom applications to various states in the process workflows. The custom applications referred herein are software applications, which tend to automate various states of the process workflow. As indicated previously, a state in a process workflow is representative of a process activity. The custom applications may be designed to cater to specific requirements, such as customer requirements, market strategies, etc., of a business process as defined at a particular point in time. However, as requirements and processes undergo a change, the custom applications may no longer be of use. Hence, skilled programmers may be required to rewrite and recompile the source code of these custom applications and incorporate changes to the process management systems. Changes to the process management systems may be slow and costly to implement. Further, the custom applications linked to a particular process workflow may not work for other process workflows.

Generally, changes in business processes may require redefining properties of each of the process workflows. Redefining the properties of the process workflows may include modifying each state of the process workflows. The modification of each state of a process workflow may include rewriting and recompilation of complex source codes associated with the process workflow. Further, the modification may also include gathering all information associated with the process workflows stored in the process management system and reconfiguring this information with changes as applied to the process workflows. Hence, modifying the process workflows may be cumbersome and prone to human error. Furthermore, modifying the process workflows may result in an increase in system downtime, thus effecting productivity. Also, the work involved in redefining and modifying the process workflows may be extensive in cases where information associated with the process workflows is to be gathered from multiple sources within the process management system, and involve a multitude of user types, such as hosts, dispatchers, administrators, workers, and mobile workers.

As described in the foregoing description, one or more custom applications may be linked to each state of the process workflows within the process management system. These custom applications may also be required to be modified for changes in the process workflows. Further, for modifying these custom applications, the programmers may rewrite and recompile the source code for each of the custom applications and re-link these custom applications to the process workflows. Further, for changes in the process workflows, new applications may be created, tested and then incorporated in the process management system. Creation and testing of new applications for each state of the process workflows may be time consuming and cumbersome. Furthermore, for each new application, data associated with that application is to be captured accurately.

The present subject matter discloses a configurable process management system (CPMS) capable of modeling process workflows and creating custom applications for any industry or business, without the need of writing the source code. Further, the CPMS is capable of modifying the pre-existing process workflows and pre-existing custom applications, without the need of rewriting and recompiling of the source code. In one embodiment, the CPMS may be configured to model the process workflows based on business requirements of the specific business process. For example, process workflows can be modeled for hotel reservation process, and travel planning process. Different process activities performed within each of these process workflows may be referred as different states of the process workflow. Referring to the above example, the process workflow for hotel reservation may have different states like checking room availability, making reservation, accepting the payment through credit card/debit card, and cancelling the reservation. Further, the process workflow for travel planning may have different states like checking flight availability, checking room availability in a hotel, making reservation, and cancelling the reservation.

As described in the foregoing description, one or more custom applications may be linked to the process workflows based on process requirements of a specific industry or business. In an embodiment, the CPMS may be configured to link the custom applications to the process workflows based on parameters, such as customer needs, market strategies, and the like. Referring to the above example of hotel reservation and travel planning process workflows, the custom applications may include applications for checking room availability, making reservation, and accepting online payment, and the like. Further, in an implementation, for changes in the process requirements, the CPMS may be configured to automate the changes in the custom applications. In another implementation, the CPMS may also be configured to automatically create new applications in order to cater to the changes in the process requirements, without the need of writing the source codes manually. Again referring to the above example of the process workflows, a new state for computing discounts for loyal customers may be added to the hotel reservation and travel planning workflows. Accordingly, new custom applications for determining loyal customers and computing loyalty discounts may be automatically created in the CPMS, and linked to corresponding state. Thus, the system downtime and resources used for writing and compiling the source code for the custom applications may be reduced.

In an implementation of the present subject matter, the CPMS may be configured to automate and manage allocation of work to one or more team members, based on a plurality of factors. In an example, the plurality of factors may include current workload, availability, leave record, work experience, and the like. The CPMS may further be configured to re-allocate the work allocated to a team member to another team member based on the plurality of factors. In another implementation, the CPMS may be configured to track and report a progress for each state of the process workflows. For example, in the travel planning process workflow, number of reservations and/or advertisements made may be tracked and reported for each representative. In an example, based on the progress of each state of the process workflows, productivity, and efficiency for each team member may be obtained.

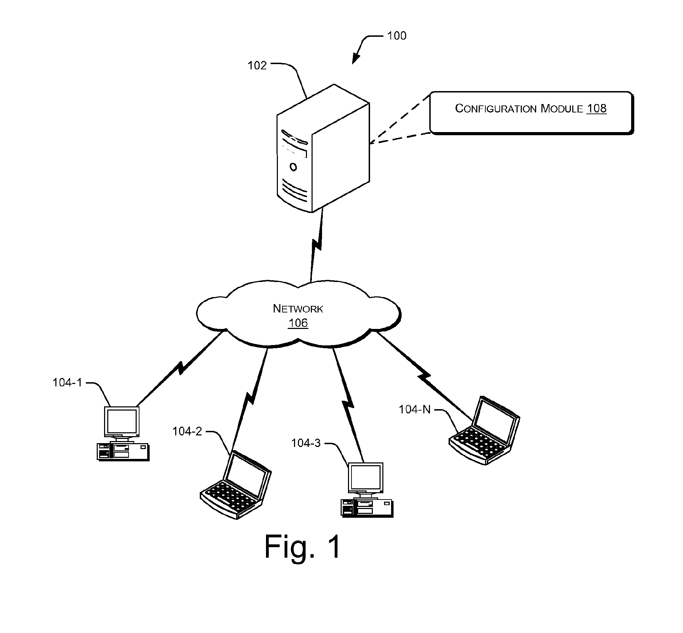

Fig. 1 illustrates a network environment 100 implementing a configurable process management system 102, in accordance with an embodiment of the present subject matter. In one implementation, the network environment 100 can be a public network environment, including thousands of personal computers, laptops, various servers, such as blade servers, and other computing devices. In another implementation, the network environment 100 can be a private network environment with a limited number of personal computers, servers, laptops, and other computing devices.

The configurable process management system 102 (hereinafter referred to as CPMS 102) is communicatively connected to a plurality of user devices 104-1, 104-2, 104-3...104-N, collectively referred to as user devices 104 and individually referred to as a user device 104, through a network 106. In one implementation, a plurality of users may use the user devices 104 to communicate with the CPMS 102.

The CPMS 102 and the user devices 104 may be implemented as any of a variety of conventional computing devices, including, servers, a desktop personal computer, a notebook or portable computer, a workstation, a mainframe computer, and a laptop. Further, in one implementation, the CPMS 102 may itself be a distributed or centralized network system in which different computing devices may host one or more of the hardware or software components of the CPMS 102. In another implementation, the various components of the CPMS 102 may be implemented as a part of the same computing device.

The CPMS 102 may be connected to the user devices 104 over the network 106 through one or more communication links. The communication links between the CPMS 102 and the user devices 104 are enabled through a desired form of communication, for example, via dial-up modem connections, cable links, digital subscriber lines (DSL), wireless or satellite links, or any other suitable form of communication.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, routers, for providing a link between the CPMS 102 and the user devices 104. The network devices within the network 106 may interact with the CPMS 102, and the user devices 104 through the communication links.

The CPMS 102, in accordance with the present subject can be configured to model the process workflows related to any process or domain. The CPMS 102, for example, may be equipped with a workflow modeler (not shown) for enabling users to design a desired workflow based on the process or business requirements. The workflow may include various process activities in form of a plurality of states. As described previously, the CPMS 102 may be configured to create one or more custom applications, which automate such process activities. The CPMS 102 links such custom applications to one or more process workflows. The process workflows to which the custom applications are to be linked may be selected by the user, and is therefore referred to as selected process workflow(s). Referring to the example described in the foregoing description, a custom application "checking room availability" can be created and linked or associated to one or more process workflows like a hotel reservation process workflow and a travel planning workflow. The CPMS 102 generates such custom applications without the need of writing the source codes for such applications. Thus, a user who is non-programmer can also create various custom applications to automate various process activities.

Further, according to the changes in the process requirements, the CPMS 102 can be dynamically configured to automate the changes in the custom applications, thereby keeping the applications updated. Thus, the system downtime and resources used for writing/re-writing, compiling, and testing the source code for the custom applications may be reduced. For creating such custom applications, a user may simply provide various application inputs in various preconfigured forms and fields, and the CPMS 102 readily generates the desired custom applications based on the application inputs. The CPMS 102, for example, uses readily available code generators to automatically generate the source code. In one implementation, a hyperlink to the newly created application may be provided to the user.

According to an implementation of the present subject matter, the CPMS 102 includes a configuration module 108 that provides the functionality of designing the process workflow to the users. The workflow modeler may be provided to the user on a graphical user interface of the CPMS 102. The workflow modeler may contains various drawings tools, writing tools, editing tools, document attachment tools, and other designing tools, enabling the user to model the process workflow, according to the business/process requirements. Additionally, workflow modeler includes various options of implementing conditional statements, for example, if-else statements, within the workflow, thereby facilitating designing of a variety of process workflows varying from simple process workflows to complex process workflows.

As indicated previously, various custom applications can be created for automating various states in a process workflow. The configuration module 108 creates such applications based on receiving application inputs from the user. The application inputs may include application data and a workflow selection criterion indicating the workflow that is to be associated with the application. The application data may include, for example, process activity requirements. The configuration module 108 associates the created custom application to a process workflow. In one implementation, the custom application can be associated with more than one process workflow. Such custom applications when created can be deployed and hyperlinks to such applications can be provided to the users.

While creation of the custom applications, the configuration module 108, in one implementation, may be configured to assign roles and responsibilities to the users based on various parameters including, but not limited to, designation of the users, experience, and expertise of the users. The roles and responsibilities define access and privileges of the users to a custom application. Considering an example of an application, namely, process tracker, a team manager may be assigned the roles and responsibilities of managing a team, and have privileges of allocating the work to his team members. Referring to the example of hotel reservation process workflow, a hotel manager may be assigned with roles and responsibilities of evaluating the work of other representatives based on various predetermined quality parameters, such as number of reservations made by each representative, advertising the customers about various services offered by the hotel. The custom applications, thus, created by the configuration module 108 can be used by the users for managing the process, according to the defined roles, responsibilities and privileges.

The configuration module 108, according to one implementation, may configure a custom application to allow uploading of data in various formats and also allows for inserting comments before moving a task to the next stage or a next task owner. Each task may be presented to a task owner with the previously received inputs and the stage of completion of the task. The task owner can further add required inputs at the specific task level and also add comments for visibility to the remaining task owners.

Further, the configuration module 108 may configure a custom application to display data of one user and inputs/comments provided by another user along side in an application display window. Such feature of being able to review the data as it is being updated assists in a preview of the data can be reviewed before being submitted to the next step or task. This helps in reducing the processing time because of the immediate ability to review, and improves throughput time and reduces the cost of rework.

The system according to the present subject matter can therefore be dynamically configured to create various workflows and custom applications in a simple and cost-effective manner. Such applications help in management of day to day process activities.

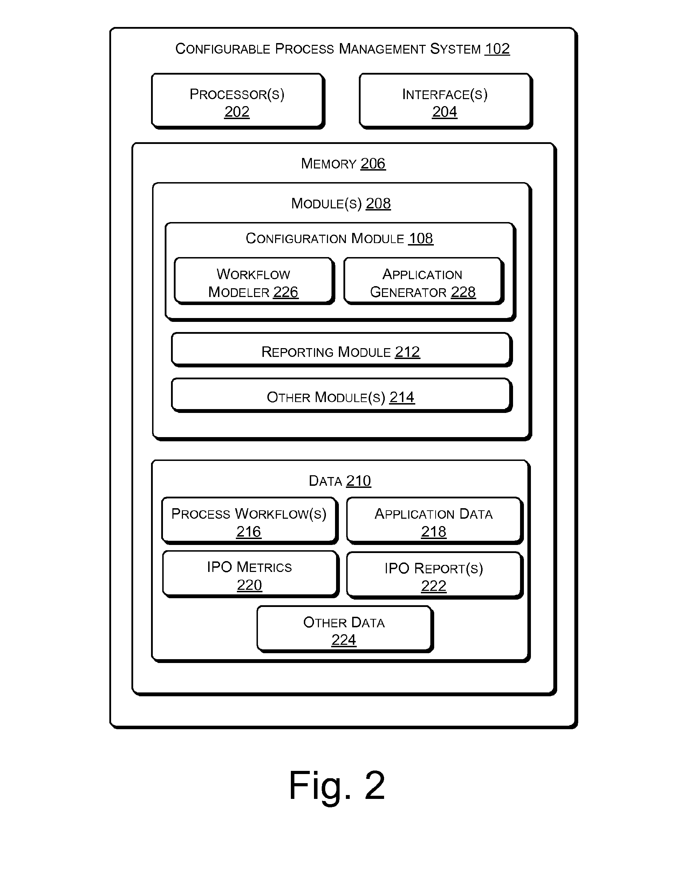

Fig. 2 illustrates details of the CPMS 102, according to an embodiment of the present subject matter.

In said embodiment, the CPMS 102 includes one or more processor(s) 202, a memory 206 coupled to the processor(s) 202, and interface(s) 204. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 are configured to fetch and execute computer-readable instructions and data stored in the memory 206.

The interface(s) 204 may include a variety of software and hardware interfaces, for example, interface(s) 204 may enable the CPMS 102 to communicate over the network 106, and may include one or more interface for peripheral device(s), such as a keyboard, a mouse, an external memory, a printer, etc. Further, the ports for connecting the CPMS 102 with other computing devices, such as web servers and external databases. The interface(s) 204 may facilitate multiple communications within a wide variety of protocols and networks, such as a network, including wired networks, e.g., LAN, cable, etc., and wireless networks, e.g., WLAN, satellite, etc.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 also includes modules 208 and data 210.

The modules 206 include routines, programs, objects, components, data structures, etc., which perform particular tasks or implement particular abstract data types. The modules 208 include a configuration module 108, a reporting module 212, and other module(s) 214. The other module(s) 214 may include programs or coded instructions that supplement applications and functions on the CPMS 102, for example, programs in the operating system. Further, the configuration module 108 includes the workflow modeler 226 and an application generator 228.

The data 210, amongst other things, serves as a repository for storing data processed, received, and generated by one or more of the modules 208. The data 210 includes process workflow(s) 216, application data 218, IPO metrics 220, IPO report(s) 222, and other data 224. The other data 224 may include data generated as a result of the execution of one or more modules in the other module(s) 214.

In operation, the workflow modeler 226 within the configuration module 108 facilitates a user to model a desired process workflow 216. The user may use the workflow modeler 226 for designing one or more process workflows 216 for various business processes, depending upon the process requirements. Such process workflows 216 serve as a visual representation of the business process. Each process workflow 216 includes a plurality of states depicting various process activities. According to an implementation, the workflow modeler 226 can be configured to create the process workflows 216 for any business process and business domain. The process workflows 216, thus, generated by the workflow modeler 226 may be modified, whenever required. According to an implementation, the workflow modeler 226 enables the user to define various business rules and decisions to be applied to the process workflow 216.

As indicated previously, one or more custom applications can be created, which automate various states, i.e., process activities within a process workflow 216. The application generator 228 within the configuration module 108 facilitates creation of various custom application based on receiving application inputs from the user. The application inputs referred herein may include application data and a workflow selection criterion specifying the process workflow(s) 216 to which the custom application is to be associated. The application data may be indicative of process activity requirements, it may include client name, application name, data corresponding to various fields provided in a graphical user interface of the CPMS 102. For example, a process workflow 216 for Business Process Outsourcing (BPO) may be created using the workflow modeler 226 and various custom applications for automating different process activities in the BPO may be created by the application generator 228. The application generator 228, for example, automatically generates a source code for the custom application using readily available code generators.

In one implementation, a custom application namely 'process tracker' can be created by a user, such as a team lead for managing and monitoring the team members, and work done by the team members. In said implementation, various user roles can be specified in the process tracker, and the team members can be mapped to such roles. Further, login identifiers (IDs) for the team members can be created enabling the team members to logging into the process tracker. A provision of grouping various team members into user groups may also be provided to the team lead.

With such a custom application, the team lead may allocate cases to team members, which can be viewed by the team members in their respective CPMS mail box. Further, the team lead may view or track screenshots of their team members. The work done by the team members, time sheets of the team members, their leave records, status of the cases allocated to them, etc., can be logged into a repository associated with the CPMS 102 as Input, Output, and Processing (IPO) data. In other words, every transaction done through the CPMS 102 by users is stored with the repository associated with the CPMS 102. The repository (not shown in the figure) may either be an external repository, which is associated with the CPMS 102, or an internal repository implemented within the CPMS 102. In certain instances, when the number of active cases handled by a team member exceeds certain threshold value, one or more cases of such team member may be reallocated or reassigned to other team members, thereby balancing the load.

The configuration module 108, in accordance with an implementation of the present subject matter, may be configured to integrate the custom applications with external systems or databases. Such an integration option may be provided by the user as application inputs. In an implementation, the configuration module 108 may integrate the custom application with MS Outlook®, IBM Lotus Notes®, and Enterprise Resource Planning (ERP) systems, in order to retrieve data from such systems for various input, output, and processing (IPO) purposes.

In one implementation, the reporting module 212 of the CPMS 102 can be configured to generate various Input Output Processing (IPO) reports 222 based on one or more predefined IPO metrics 220. In an example, the IPO reports 222 may include status reports, productivity reports, login reports, and the like. For example, a productivity report for a call-centre executive may be indicative of an overall efficiency in terms of work assigned to the call-centre executive. The CPMS 102 may create the productivity report of the call-centre executive based on factors, such as the number of products sold, number of products advertised, number of hours billed, calls attended, and the like. Based on a comparison of the productivity report with a target productivity level, the CPMS 102 may depict the efficiency and the productivity of the call-centre executive. In an implementation, the IPO reports 222 may be generated based on region, time-period, employee-scale, and the like. In another implementation, separate IPO reports 222 may be generated for each state of a process workflow 216.

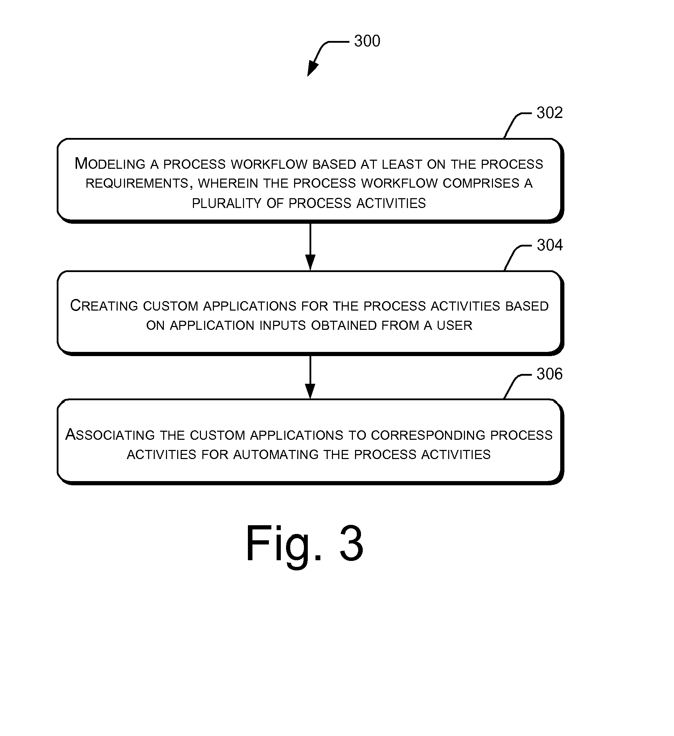

Fig. 3 illustrates a method 300 for configuring a process workflow and custom applications in the configurable process management system, in accordance with an implementation of the present subject matter.

The methods may be described in the general context of computer executable instructions. Generally, computer executable instructions can include routines, programs, objects, components, data structures, procedures, modules, functions, etc., that perform particular functions or implement particular abstract data types. The methods may also be practiced in a distributed computing environment where functions are performed by remote processing devices that are linked through a communications network. In a distributed computing environment, computer executable instructions may be located in both local and remote computer storage media, including memory storage devices.

The order in which the methods are described is not intended to be construed as a limitation, and any number of the described method blocks can be combined in any order to implement the method, or an alternative method. Additionally, individual blocks may be deleted from the methods without departing from the spirit and scope of the subject matter described herein. Furthermore, the method 300 can be implemented in any suitable hardware, software, firmware, or combination thereof.

Referring to Fig. 3, at block 302 a process workflow is modeled based at least on process requirements, wherein the process workflow comprises a plurality of process activities. In one implementation, a workflow modeler 226 creates the process workflow based on the process requirements as obtained from a user. The process workflow includes a series of process activities as different states within the process workflow.

At the block 304, the custom applications are created for the process activities based on the application inputs obtained from the user. In an example, the application inputs may include application data 218 and a workflow selection criterion. As described in the foregoing, the application data 218 may be indicative of process activity requirements. The workflow selection criteria may be indicative of a process workflow that is to be associated with a custom application. In one implementation, the configuration module 108 obtains the application inputs form the user. Subsequent to obtaining the application inputs, the configuration module 108 creates custom applications for automating states/process activities of the process workflows 216. In an implementation, the new custom application may be created by the application generator 228. In another implementation, pre-existing custom applications may be modified by the application generator 228 based on a change in the process activity requirements. After the custom applications are created, the method 300 branches to block 306.

At the block 306, the custom applications are associated or linked to corresponding process activities of the process workflow for automating the process activities, thereby automating the process workflow. In an implementation, hyperlinks of the created custom applications may be provided to the user on a graphical user interface of the CPMS 102. Further, the custom applications may also be deleted from the CPMS 102 as and when required. In one implementation, the configuration module 108 associates the custom application to the corresponding process activities of the process workflow. Such custom applications, thus, generated can be used by the users to automate process activities.

Although embodiments for configurable process management system have been described in a language specific to structural features and/or methods, it is to be understood that the invention is not necessarily limited to the specific features or methods described. Rather, the specific features and methods are disclosed as exemplary embodiments for configurable process management.

## Claims

1. A configurable process management system (102) comprising:
a processor (202); and
a memory (206) coupled to the processor (202), the memory (206) comprising:
a configuration module (108) configured to:
model one or more process workflows (216) based at least on process requirements, wherein each of the process workflows (216) comprises a plurality of process activities;
create at least one custom application for one of the plurality of process activities, based on application inputs obtained from a user; and
associate the at least custom application with a selected process workflow (216) amongst the one or more process workflows (216).

2. The configurable process management system (102) as claimed in claim 1, wherein the configuration module (108) is further configured to assign at least one of roles and privileges to a plurality of users of the at least one custom application.

3. The configurable process management system (102) as claimed in claim 1, wherein the configuration module (108) is further configured to integrate the at least one custom application to at least one external system to retrieve data from the at least one external system for input, output, and processing (IPO) purposes.

4. The configurable process management system (102) as claimed in claim 1 further comprises a reporting module (212) configured to generate at least one Input Output Processing (IPO) report (222) based at least on predefined IPO metrics (220).

5. The configurable process management system (102) as claimed in claim 4, wherein the IPO report (222) may be a productivity report, a status report, and a login report.

6. The configurable process management system (102) as claimed in claim 1, wherein the configuration module (108) includes an application generator (228) that is configured to generate a source code to create the at least one custom application.

7. The configurable process management system (102) as claimed in claim 1, wherein the application inputs include application data indicative of process activity requirements, and a workflow selection criterion indicating the selected process workflow (216) amongst the one or more process workflows (216) to which the at least one custom application is to be associated.

8. A method comprising:
modeling a process workflow based at least on process requirements, wherein the process workflow comprises a plurality of process activities;
creating a custom application, by a configurable process management system, for at least one process activity amongst the plurality of process activities based on application inputs obtained from a user; and
associating the custom application with the at least process activity for automating the process activity of the process workflow.

9. The method as claimed in claim 8 further comprising generating at least one Input Output Processing (IPO) report based at least on predefined IPO metrics.

10. The method as claimed in claim 9, wherein the IPO report is one of a productivity report, a status report, and a login report.

11. The method as claimed in claim 8 further comprising assigning roles and privileges for a plurality of users of the custom application, wherein the roles indicate responsibilities of each of the plurality of users, and privileges indicate accessibility of each of the plurality of users to the custom application.

12. The method as claimed in claim 8 further comprising integrating the custom application with at least one external system to retrieve data from the at least one external system for input, output, and processing (IPO) purposes.

13. The method as claimed in claim 8, wherein the creating comprises automatically generating a source code for the custom application using a code generator.

14. The method as claimed in claim 13, wherein the creating further comprises providing a hyperlink of the custom application to the user.

15. A computer-readable medium having embodied thereon a computer program for executing a method comprising:
modeling a process workflow based at least on process requirements, wherein the process workflow comprises a plurality of process activities;
creating a custom application for at least one process activity amongst the plurality of process activities based on application inputs obtained from a user; and
associating the custom application with the at least process activity for automating the process activity of the process workflow.
